# EUROPÄISCHE PATENTSCHRIFT

(11) **EP 0 953 852 B1**
(45) Veröffentlichungstag und Bekanntmachung des Hinweises auf die Patenterteilung: **08.06.2005**
(21) Anmeldenummer: 99107855.1
(22) Anmeldetag: 21.04.1999
(51) Int. Cl.: G02B 1/10, C08J 7/04

(54) **Für ein Kunststoffsubstrat bestimmtes Schichtpaket und Verfahren zum Erzeugen eines solchen Schichtpaketes**
Multilayered coating for plastic surfaces and a process for the fabrication of such multilayered coating
Revêtement multicouche pour substrat en matière plastique et procédé de fabrication de ce revêtement multicouche

(30) Priorität: 30.04.1998 DE 19819414
(43) Veröffentlichungstag der Anmeldung: 03.11.1999
(73) Patentinhaber: Leybold Optics GmbH, 63775 Alzenau (DE)
(72) Erfinder: Jung, Michael, 63755 Alzenau (DE)
(74) Vertreter: Hebing, Norbert, Dipl.-Phys.

(56) Entgegenhaltungen:
- WO-A-85/04601
- WO-A-92/05951
- WO-A-92/06843
- WO-A-95/23652
- WO-A-97/13802
- US-A- 5 506 038
- US-A- 5 641 559
- PATENT ABSTRACTS OF JAPAN vol. 012, no. 354 (P-761), 22. September 1988 (1988-09-22) & JP 63 106703 A (NIKON CORP), 11. Mai 1988 (1988-05-11)

## Beschreibung

Die Erfindung betrifft ein für ein Kunststoffsubstrat bestimmtes, durchsichtiges, hartes Schichtpaket, welches zumindest eine Schicht aus TMDS (Tethrametyldisiloxan) und darauf eine Schicht aus durch Oxidation gehärtetem TMDS hat. Weiterhin betrifft die Erfindung ein Verfahren zum Erzeugen eines solchen Schichtpaketes auf einem Kunststoffsubstrat, bei dem das Substrat zunächst mit TMDS (Tethrametyldisiloxan) beschichtet und darauf eine Schicht aus mit Sauerstoff gehärtetem TMDS aufgebracht wird.

Kunststoffsubstrate müssen oftmals mit einer transparenten Schicht als Kratz- und Verschleißschutz versehen werden. Das ist beispielsweise bei Brillengläsern aus Kunststoff der Fall, weil diese ohne einen solchen Kratzschutz beim Reinigen mittels eines Tuches zerkratzen würden, wenn sich auf dem Brillenglas ein hartes Staubkorn befände. Ebenso ist ein Kratzschutz auf Schutzgläsern für die Scheinwerfer von Kraftfahrzeugen wünschenswert, insbesondere dann, wenn die Schutzgläser durch Wischer gereinigt werden. Auch auf Compactdisks und auf Displays ist eine Kratzschutzschicht sinnvoll.

Bisher hat man Brillengläser zunächst mit einer weichen TMDS-Schicht und darauf mit einer beim Abscheiden im Plasma durch reinen Sauerstoff oxidierten und dadurch gehärteten TMDS-Schicht versehene (vgl. WO 97/13802 für ein vergleishbares Schichtsystem für ein LCD-Gerät). Ein solches Schichtsystem erfüllt jedoch nicht die heutigen, sehr strengen Anforderungen an Brillengläser. Insbesondere beim Kochtest werden solche Schichten oftmals zerstört, weil im TMDS durch den Sauerstoff nicht alle OH-Gruppen entfernt werden können oder sich neu bilden. Auch die übrigen, bei Brillengläsern gebräuchlichen Tests, der Kratztest mit einem Radiergummi, der Tumbletest in einer rotierenden Trommel mit verschiedenen Zuschlagstoffen, der Einschlagtest und der Temperaturtest führen bei den bekannten Beschichtungssystemen nur zu unbefriedigenden Ergebnissen. Das gilt auch für Kunststoffgläser mit aufgedampftem Quartz und für Kunststoffgläser mit durch nasschemische Verfahren aufgebrachten Schichten.

Der Erfindung liegt das Problem zugrunde, ein Schichtpaket der eingangs genannten Art so auszubilden, dass es die hohen Anforderungen an eine Beschichtung für Brillengläser erfüllen kann und im optisch sichtbaren Spektrum und UV-nahen Bereich eine möglichst hohe Transparenz hat. Weiterhin soll ein Verfahren zur Erzeugung eines solchen Schichtpakets geschaffen werden.

Das erstgenannte Problem wird erfindungsgemäß dadurch gelöst, dass mehrere Schichtfolgen jeweils aus TMDS und gehärtetem TMDS übereinander vorgesehen sind und dass sich zwischen jeder Schichtfolge jeweils eine dünne, durchsichtige Trennschicht aus Kohlenstoff befindet.

Durch solche Trennschichten, welche so dünn sein können, dass die Transparenz des Schichtsystems nicht leidet, kann man ein relativ dickes Schichtsystem aus mehreren übereinstimmenden Schichtfolgen erzeugen, welches trotz großer Härte eine hohe Flexibilität hat, weil das Säulenwachstum in den TMDS-Schichten jeweils durch diese Trennschicht unterbrochen wird. Durch die nicht gehärteten TMDS-Schichten lässt sich zum Beispiel der Kugeleinschlagtest sicher bestehen, ohne dass es zu Abplatzungen kommt.

Besonders gut ist das Substrat vor Zerkratzen geschützt, wenn das Schichtpaket außenseitig eine nicht gehärtete TMDS-Schicht und eine darauf aufgebrachte, durchsichtige Deckschicht aus Kohlenstoff aufweist. Die Kohlenstoffschicht haftet auf dem ungehärteten TMDS weit besser als auf gehärtetem TMDS, so dass ein Abplatzen nicht zu befürchten ist.

Für den Anwendungsfall von Kunststoff-Brillengläsern hat es sich als optimale Bemessung des Schichtsystems herausgestellt, wenn die TMDS-Schicht etwa 1 µm, die gehärtete TMDS-Schicht etwa 0,2 µm, die Trennschicht etwa 3 - 5 nm und die Deckschicht etwa 10 - 15 nm dick ist.

Die zweitgenannte Aufgabe, nämlich die Schaffung eines Schichtpaketes auf einem Kunststoffsubstrat wird erfindungsgemäß dadurch gelöst, dass auf der Schichtfolge von TMDS und gehärtetem TMDS zumindest eine weitere, übereinstimmende Schichtfolge aufgebracht wird und dass zwischen jeder Schichtfolge eine Trennschicht aus Kohlenstoff gebildet wird.

Ein solches Schichtpaket kann beispielsweise mittels eines RF-Plasmareaktors aufgebracht werden. Für die weichen TMDS-Schichten benutzt man eine mittlere RF-Leistung, während für die gehärteten TMDS-Schichten und die Trennschichten eine hohe RF-Leistung erforderlich wird. Alle Plasmaprozesse arbeiten bei Drücken zwischen 0,1 bis 20 x 10⁻³ mbar. Das erfindungsgemäße Schichtpaket erfüllt alle derzeit gebräuchlichen Tests für Kunststoff-Brillengläser und zeichnet sich insbesondere durch hohe Kratzfestigkeit und Härte bei gleichzeitiger hoher Elastizität und damit Sicherheit gegen Abplatzen aus.

Gemäß einer vorteilhaften Weiterbildung des Verfahrens wird das Schichtpaket außenseitig mit einer nicht gehärteten TMDS-Schicht und einer darauf aufgebrachten, durchsichtigen Deckschicht aus Kohlenstoff versehen. Durch eine solche Deckschicht erhöht sich die Kratzfestigkeit nochmals, ohne dass die Gefahr eines Abplatzens besteht.

Der Kohlenstoff für die Erzeugung der Trennschicht und der Deckschicht lässt sich besonders gut zur Bildung von α-Kohlenstoff abscheiden, wenn die Trennschicht und die Deckschicht im Plasma aus 1-Hexen als Ausgangssubstanz abgeschieden wird.

Der Oxidationsvorgang beim Erzeugen der TMDS-Schicht verläuft langsamer als mit reinem Sauerstoff und ist besonders feinfühlig steuerbar, wenn gemäß einer anderen Weiterbildung des Verfahrens zum Härten der TMDS-Schicht der Sauerstoff als in Alkohol chemisch gebundener Sauerstoff zugeführt wird. Dieser Oxidiervorgang mittels Alkohol ist auch für Permeations-Sperrschichtsysteme verwendbar, die auf TMDS-Basis abgeschieden werden. Weiterhin eignet sich diese Art der Oxidation für jede anderen Oxidationsprozesse von Siloxanen im Plasma.

Als besonders günstig hat es sich herausgestellt, wenn es sich bei dem Alkohol um Methanol handelt.

Für den Anwendungsfall bei Kunststoff-Brillengläsern ist das Schichtpaket optimal bemessen, wenn die TMDS-Schicht etwa 1 µm, die gehärtete TMDS-Schicht etwa 0,2 µm, die Trennschicht etwa 3 - 5 nm und die Deckschicht etwa 10 - 15 nm ausgebildet wird.

## Patentansprüche

1. Durchsichtiges, hartes Schichtpaket für ein Kunststoffsubstrat, welches zumindest eine Schicht aus TMDS (Tethrametyldisiloxan) und darauf eine Schicht aus durch Oxidation gehärtetem TMDS hat, **dadurch gekennzeichnet, dass** mehrere Schichtfolgen jeweils aus TMDS und gehärtetem TMDS übereinander vorgesehen sind und dass sich zwischen jeder Schichtfolge jeweils eine dünne, durchsichtige Trennschicht aus Kohlenstoff befindet.

2. Schichtpaket nach Anspruch 1, **dadurch gekennzeichnet, dass** das Schichtpaket außenseitig eine nicht gehärtete TMDS-Schicht und eine darauf aufgebrachte, durchsichtige Deckschicht aus Kohlenstoff aufweist.

3. Schichtpaket nach Anspruch 2, **dadurch gekennzeichnet, dass** die TMDS-Schicht etwa 1 µm, die gehärtete TMDS-Schicht etwa 0,2 µm, die Trennschicht etwa 3 - 5 nm und die Deckschicht etwa 10 - 15 nm dick ist.

4. Verfahren zum Erzeugen eines Schichtpaketes auf einem Kunststoffsubstrat, bei dem das Kunststoffsubstrat zunächst mit TMDS (Tethrametyldisiloxan) beschichtet und darauf eine Schicht aus mit Sauerstoff gehärtetem TMDS aufgebracht wird, **dadurch gekennzeichnet, dass** auf der Schichtfolge von TMDS und gehärtetem TMDS zumindest eine weitere, übereinstimmende Schichtfolge aufgebracht wird und dass zwischen jeder Schichtfolge eine Trennschicht aus Kohlenstoff gebildet wird.

5. Verfahren nach Anspruch 4, **dadurch gekennzeichnet, dass** das Schichtpaket außenseitig mit einer nicht gehärteten TMDS-Schicht und einer darauf aufgebrachten, durchsichtigen Deckschicht aus Kohlenstoff versehen wird.

6. Verfahren nach Anspruch 5, **dadurch gekennzeichnet, dass** die Trennschicht und die Deckschicht im Plasma aus 1-Hexen als Ausgangssubstanz abgeschieden werden.

7. Verfahren nach zumindest einem der Ansprüche 4 bis 6, **dadurch gekennzeichnet, dass** zum Härten der TMDS-Schicht der Sauerstoff als in Alkohol chemisch gebundener Sauerstoff zugeführt wird.

8. Verfahren nach Anspruch 7, **dadurch gekennzeichnet, dass** es sich bei dem Alkohol um Methanol handelt.

9. Verfahren nach Anspruch 5, **dadurch gekennzeichnet, dass** die TMDS-Schicht etwa 1 µm, die gehärtete TMDS-Schicht etwa 0,2 µm, die Trennschicht etwa 3 - 5 nm und die Deckschicht etwa 10 - 15 nm ausgebildet wird.

## Claims

1. Transparent hard multilayered coating for a plastic material substrate, the said coating having at least one layer of TMDS (tetramethyldisiloxane) with a layer of TMDS hardened thereon by oxidation, **characterized in that** several layer sequences each consisting of TMDS and hardened TMDS are provided one over the other and **in that** a thin transparent parting layer of carbon is present between the layer sequences.

2. Multilayered coating according to Claim 1, **characterized in that** the multilayered coating has an unhardened TMDS outer layer coated with a transparent finish coating of carbon.

3. Multilayered coating according to Claim 2, **characterized in that** the TMDS layer is approximately 1 µm thick; the hardened TMDS layer, approximately 0.2 µm thick; the parting layer, approximately 3 - 5 nm thick; and the finish coating, approximately 10 - 15 nm thick.

4. Process for producing a multilayered coating on a plastic material substrate wherein the plastic material substrate is first coated with TMDS (tetramethyldisiloxane) and a layer of TMDS hardened with oxygen is applied thereon, **characterized in that** at least one further identical layer sequence is applied over the layer sequence of TMDS and hardened TMDS and **in that** a parting layer of carbon is formed between the layer sequences.

5. Process according to Claim 4, **characterized in that** the multilayered coating is given an unhardened TMDS outer layer which is coated with a transparent finish coating of carbon.

6. Process according to Claim 5, **characterized in that** the parting layer and the finish coating are deposited in the plasma from 1-hexene as initial substance.

7. Process according to at least one of Claims 4 to 6, **characterized in that** the oxygen for hardening the TMDS layer is supplied as oxygen chemically bound in alcohol

8. Process according to Claim 7, **characterized in that** the alcohol used in the process is methanol.

9. Process according to Claim 5, **characterized in that** the TMDS layer is formed approximately 1 µm thick; the hardened TMDS layer, approximately 0.2 µm thick; the parting layer, approximately 3 - 5 nm thick; and the finish coating, approximately 10 - 15 nm thick.

## Revendications

1. Paquet de couches dures et transparentes pour un substrat de matière plastique, lequel paquet comporte au moins une couche de TMDS (tétraméthyldisiloxane) et, placée par-dessus, une couche de TDMS durci par oxydation, **caractérisé en ce que** plusieurs suites de couches constituées chacune de TDMS et de TDMS durci sont prévues les unes sur les autres et **en ce qu'**une mince couche de séparation transparente en carbone est disposée entre chaque suite de couches.

2. Paquet de couches selon la revendication 1, **caractérisé en ce que** le paquet de couches comporte du côté extérieur une couche de TDMS non durci et, placée par-dessus, une couche de revêtement transparente en carbone.

3. Paquet de couches selon la revendication 2, **caractérisé en ce que** la couche de TDMS a une épaisseur d'environ 1 µm, la couche de TDMS durci a une épaisseur d'environ 0,2 µm, la couche de séparation a une épaisseur d'environ 3 à 5 nm et la couche de revêtement a une épaisseur d'environ 10 à 15 nm.

4. Procédé de génération d'un paquet de couches sur un substrat de matière plastique, dans lequel le substrat de matière plastique est revêtu tout d'abord de TDMS (tétraméthyldisiloxane) et une couche de TDMS durci à l'oxygène est placée par-dessus, **caractérisé en ce que** au moins une autre suite de couches coïncidentes est placée sur la suite de couches de TDMS et de TDMS durci et **en ce qu'**une couche de séparation en carbone est formée entre chaque suite de couches.

5. Procédé selon la revendication 4, **caractérisé en ce que** le paquet de couches est doté du côté extérieur d'une couche de TDMS non durci et d'une couche de revêtement transparente en carbone placée par-dessus.

6. Procédé selon la revendication 5, **caractérisé en ce que** la couche de séparation et la couche de revêtement sont séparées dans le plasma de 1-hexane comme substance de départ.

7. Procédé selon au moins une des revendications 4 à 6, **caractérisé en ce que**, pour durcir la couche de TDMS, l'oxygène est amené sous forme d'oxygène lié chimiquement à un alcool.

8. Procédé selon la revendication 7, **caractérisé en ce que** l'alcool est du méthanol.

9. Procédé selon la revendication 5, **caractérisé en ce que** la couche de TDMS a une épaisseur d'environ 1 µm, la couche de TDMS durci a une épaisseur d'environ 0,2 µm, la couche de séparation a une épaisseur d'environ 3 à 5 nm et la couche de revêtement a une épaisseur d'environ 10 à 15 nm.
